# EUROPÄISCHE PATENTANMELDUNG

(11) **EP 0 823 219 A1**
(43) Veröffentlichungstag der Anmeldung: **11.02.1998**
(21) Anmeldenummer: 97113442.4
(22) Anmeldetag: 04.08.1997
(51) Int. Cl.: A23L 3/16, A23L 3/22

(54) **Verfahren zur kontinuierlichen Dampfdrucksterilisation und -förderung von Nebenprodukten der Fleichindustrie**

(30) Priorität: 05.08.1996 DE 19631649
(71) Anmelder: Oberthür, Radulf, Dr., 49844 Bawinkel (DE)
(72) Erfinder: Oberthür, Radulf, Dr., 49844 Bawinkel (DE)
(74) Vertreter: Habbel, Ludwig (Lutz)

(57) **Zusammenfassung**

Bei einem kontinuierlichen Verfahren zur Sterilisation unter gesättigtem Wasserdampf von feuchten eiweiß- und fetthaltigen Nebenprodukten der Fleischindustrie, insbesondere der Schlachtindustrie, und zum gleichzeitigen Transport dieses Materials durch das Sterilisationssystem mit Hilfe der im Material enthaltenen Energie schlägt die Erfindung vor, daß das auf <50mm Teilchengröße vorzerkleinerte Material in einem Rührautoklaven auf die Sterilisationstemperatur mit entsprechendem Sattdampfdruck des im Material enthaltenen Wassers gebracht wird, in einem angeschlossenen Halterohr eine vorgegebene Zeit bei Sterilisationstemperatur und -druck gehalten wird und durch den Druckunterschied zwischen Sterilisations- und Lagerbehälter sowie den Höhenunterschied zwischen Rohwarenpufferbehälter und Autoklaven im vorgegebenen Takt über Schleusen durch das Sterilisationssystem transportiert und durch die explosive Entspannung in der letzten Schleuse in den Lagerbehälter gefördert wird.

## Beschreibung

Es wird ein Verfahren zur Sterilisation feuchter eiweiß- und fetthaltiger Nebenprodukte der Fleischindustrie, insbesondere der Schlachtindustrie, (Rohware) beschrieben, bei dem durch Erhitzen der Nebenprodukte in einem Rührautoklaven auf eine vorgegebene Temperatur ein Wasserdampfdruck aufgebaut wird, der auf dem Sattdampfdruck des im feuchten Produkt enthaltenen Wassers gehalten wird. Eine vorgegebene minimale Verweilzeit wird durch ein anschließendes Halterohr gesichert. Die Temperatur bei sich einstellendem Sattdampfdruck des in der Rohware enthaltenen Wassers während einer bestimmten minimalen Zeit sichert eine vorgegebene Inaktivierung (Sterilisation) der in der Rohware enthaltenen Keime.

Durch die Höhendifferenz zwischen dem Pufferbehälter für die Rohware und dem Sterilisationsbereich sowie durch den Unterschied im Druck bzw. in der Enthalpie des Materials zwischen Sterilisationsbereich und Lagerbehälter für das sterilisierte Halbprodukt wird der Transport des Materials aus dem Rohwarenpufferbehälter in den Halbproduktlagerbehälter über zwei Druckschleusen ohne Zuhilfenahme mechanischer Pumpen gewährleistet.

Das sterilisierte Halbprodukt wird in geschlossenen Tankwagen abtransportiert. Qualitätskontrolle mit physikalischen Meßverfahren ist im Lagerbehälter, beim Verladen oder Entladen möglich. Bei passendem Protein- und Fettgehalt, gegebenenfalls nach Beifügung weiterer Bestandteile, z. B. von Getreideschrot, kann das Halbprodukt direkt zur Fütterung von Nutztieren, z. B. von Schweinen, verwendet werden. Es läßt sich in geeigneten Anlagen auch weiterverarbeiten, z. B. durch Trocknung und Fettabtrennung zu Proteinkonzentrat und tierischem Fett.

Gegenstand der Erfindung ist ein kontinuierliches möglichst wartungsfreies, energiesparendes und umweltfreundliches Verfahren zur Dampfdrucksterilisation und damit zur Stabilisierung von verderblichen Nebenprodukten der Fleischindustrie, insbesondere der Schlachtindustrie, zu vermarktbaren Halbprodukten, die in einfacher Weise einer Qualitätskontrolle unterworfen werden können. Dabei wird die im System enthaltene Energie so ausgenutzt, daß ein Transport ohne mechanische Pumpen durch das System bis zur Verladung gewährleistet wird.

Verderbliche eiweiß- und fetthaltige Nebenprodukte fallen insbesondere bei der Schlachtung in großen Mengen an (10 bis 40 % des Lebendgewichts eines Schlachttieres) und werden im wesentlichen zu Eiweißkonzentraten und Fetten verarbeitet. Beide finden in der Futtermittel-Industrie und in der Heimtier-Nahrungsmittel-Industrie als Zusätze Verwendung. Die Fette werden außerdem als Grundstoff für die Fettchemie benötigt.

In der Regel werden die Schlachtnebenprodukte im Schlachthof entweder bei Umgebungstemperatur oder gekühlt in Bunkern oder in Wechselcontainern bis zum Abtransport zum Verwertungsbetrieb gelagert. Im Lagerbereich kommt es durch die alsbald einsetzende bakterielle und enzymatische Zersetzung zu erheblichen Geruchsbelästigungen und im Verwertungsbetrieb, besonders im Sommer, zu starken Verschmutzungen des bei der Trocknung der Nebenprodukte anfallenden Abwassers und der zu behandelnden Abluft. Außerdem ist die Qualität der Ware sowohl nach Zusammensetzung wie auch nach Zersetzungsgrad schwer abzuschätzen. Ein vorheriges Zerkleinern der Ware zur Homogenisierung für die bessere Beurteilung, den einfacheren Transport, z. B. über Druckluftkanonen, und die effektivere Kühlung führt durch Freisetzung von Bakterien und Enzymen zu einem noch leichter zersetzlichen Produkt.

Eine Kühlung der Rohware setzt intensiven Kontakt zwischen Kühlmedium und Rohware voraus, der nur durch feine Zerkleinerung herzustellen ist. Zur Verhinderung der Zersetzung muß unmittelbar danach auf unter 5 °C gekühlt werden. Später darf die Ware nie mehr über längere Zeit Temperaturen zwischen 20 und 70 °C ausgesetzt werden, da sonst eine stürmische Zersetzung verbunden mit Gasentwicklung einsetzt. Außerdem muß zunächst teure elektrische Energie eingesetzt werden, um die Rohware abzukühlen, während sie im Verwertungsbetrieb zur Trocknung mit thermischer Energie wieder aufgeheizt werden muß.

Die Sterilisation mit Hilfe gesättigten gespannten Wasserdampfes hat sich bisher als die effektivste Methode zur Inaktivierung von unerwünschten Keimen im Rohmaterial erwiesen. Sie wird im allgemeinen im Chargenbetrieb in Autoklaven durchgeführt. Bei der Entspannung der Autoklaven fallen dann aber in kurzer Zeit große Mengen an stark mit Zersetzungsstoffen beladenen Brüden an, die zu einer Stoßbelastung der Abluftreinigungsanlagen und dabei zu Geruchsbelästigungen in der Umgebung führen. Der Transport aus dem Autoklaven in einen Zwischenbehälter für das sterilisierte Gut erfolgt im allgemeinen durch den im Autoklaven vorhandenen gespannten Wasserdampf. Er läßt sich durch Intervallschaltung des Auslaßventils aus dem Autoklaven nur bis zu einem gewissen Grade regeln. Insbesondere wird bei gleichem Intervall zu Anfang in der Regel mehr durch die Entleerungsleitung in den Zwischenbehälter abgeschossen als zum Ende der Entleerung.

Eine kontinuierliche Sterilisation wurde durch Pumpen des Materials mit Hilfe einer Kolbenpumpe (Betonpumpe) durch ein Rohrsystem realisiert. Dabei wird im ersten Teil des Rohrsystems das Material aufgeheizt, und im zweiten Teil während einer vorgegebenen Zeit aus einer vorgegebenen Temperatur gehalten. Der Austrag erfolgt über eine Druckschleuse (z. B. Zellradschleuse) ohne jegliche Transportfunktion.

Die Verwertung der Schlachtnebenprodukte zu Eiweißkonzentraten und Fetten findet im allgemeinen in einem zentralen Verwertungsbetrieb statt, zu dem die Rohware von mehreren Schlachtbetrieben transportiert wird. Das größte Problem ist hierbei die Zersetzung der Rohware in der Zeit zwischen dem Anfall am Schlachtbetrieb und der Verarbeitung im zentralen Verwertungsbetrieb, sowie die optimale Organisation des Transports und die Qualitätskontrolle der Rohware.

Verfahren zur direkten Verwertung der Schlachtnebenprodukte im Schlachthof zu Eiweißkonzentraten und Fetten sind beschrieben worden, haben sich aber nur dort durchsetzen können, wo entweder ein zentraler Verwertungsbetrieb nicht in Reichweite war, wo solch ein Verwertungsbetrieb zu ungünstigen Konditionen der Nebenprodukte verwertet hat und wo spezielle Produkte einheitlicherer Herkunft (z. B. Geflügelfett) oder besserer Qualität als im zentralen Verwertungsbetrieb hergestellt werden konnten. Ein Nachteil des an einen Schlachthof angeschlossenen Verwertungsbetriebes ist immer die relativ geringe Auslastung des Betriebes (während der Schlachtung) und der damit verbundene relativ hohe Investitions- und Personalaufwand im Vergleich zum zentralen Verwertungsbetrieb. Auch die Wartung und Bedienung einer solchen Anlage stellt hohe Anforderungen an das im Schlachtbetrieb verfügbare Personal.

Die Hauptaufgabe der Erfindung besteht nun darin, die beschriebenen Nachteile der erwähnten bekannten Verfahren zu vermeiden und gleichzeitig im Schlachtbetrieb eine optimale Hygiene für die Umwandlung der dort anfallenden eiweiß- und fetthaltigen Nebenprodukte in ein schlachtbetriebsspezifisches, steriles, haltbares und leicht zu kontrollierendes Halbprodukt zu gewährleisten. Die Anlage selbst wird dabei so einfach wie möglich unter Beschränkung der beweglichen Teile auf das absolute Minimum gehalten. Sie besteht im wesentlichen aus einem ausreichend bemessenem Pufferbehälter, in den die auf eine Teilchengröße von 50 mm zerkleinerten Teile aus dem Schlachtbetrieb mit Hilfe einer Druckluftkanone geschossen werden können, einem möglichst kleinen Autoklaven zum Wärmeübertrag auf die Rohware mit anschließender aus einem Rohr bestehenden Verweilstrecke und aus einem zweiten ausreichend bemessenem Pufferbehälter für das sterilisierte Material. Autoklav und Verweilstrecke sind gegenüber den Pufferbehältern durch einfache Druckschleusen getrennt. Der Transport des Materials aus dem ersten Pufferbehälter über das Sterilisationssystem und den zweiten Pufferbehälter bis hin zum Tankwagen zum Abtransport der sterilen Ware erfolgt teils über freies Gefälle durch geeignete Anordnung der Anlagenteile und teils durch den im Autoklaven erzeugten Dampfdruck sowie die bei der Entspannung des überhitzten Wassers freiwerdende kinetische Energie des entstehenden Wasserdampfes und benötigt weder Schnecken noch mechanische Pumpen. Der Transport erfolgt somit durch die in der Rohware ohnehin enthaltene potentielle Energie der Lage oder durch die der Rohware für die Sterilisation ohnehin zuzuführende thermische Energie.

Die bei der Entspannung in Form von Dampf freiwerdende Energie wird außer für den Transport noch für die Vorwärmung der Rohware benutzt, wobei gleichzeitig der freigewordene Dampf kondensiert.

Das in sich geschlossene System läßt sich über eine Wasserstrahlpumpe, die mit dem vorgereinigten Abwasser des Schlachthofes betrieben werden kann, unter einem leichten Unterdruck halten, so daß keine geruchsbeladenen Abgase nach außen entweichen können, diese vielmehr mit dem Abwasser des Schlachtbetriebes einer biologischen Reinigung unterzogen werden können. Das gleiche läßt sich auch über einen Ventilator mit Luftbefeuchter und nachgeschalteten Biofilter erreichen.

Die Verweilstrecke, in der durch das periodische Öffnen und Schließen der Druckschleuse am Ende der Strecke und das dadurch erreichte ruckweise Vorwärtsschießen des Materials eine gut angenäherte Pfropfenströmung erreicht wird, garantiert ein sicheres Einhalten der Sterilisationsbedingungen. Gleichzeitig wird über die geringe Größe des Autoklaven mit einem kompakten Wärmeübertrag eine möglichst kurze zusätzliche Verweilzeit im Autoklaven erreicht.

Durch die weitgehende Homogenisierung der Schlachtnebenprodukte durch die Hitzebehandlung ist eine sichere Qualitätskontrolle (z. B. durch spektroskopische oder andere physikalische Meßverfahren), z. B. auf den Gehalt an Wasser, Eiweiß und Fett, möglich. Ferner läßt sich über eine Füllstandsmessung der sterilisierten Ware mit Datenfernübertragung zum Transportbetrieb oder zum Verwertungsbetrieb eine optimale Logistik für die Abholung entwickeln. Schließlich ist durch die Stabilität des sterilen Produktes eine längere Lagerung über mehrere Tage (z. B. über das Wochenende) möglich.

Das Verfahren erlaubt somit die optimale Verhinderung des Verderbs der im Schlachtbetrieb anfallenden Nebenprodukte, der bisher zu Problemen bei der Weiterverarbeitung geführt hat (Abwasser und Abluft durch Zersetzungsprodukte stark belastet; unerwünschte Abbauprodukte in den Endprodukten, z. B. freie Fettsäuren), durch die unmittelbare Sterilisation und Stabilisierung und führt damit gleichzeitig zu einer verbesserten Produktqualität der zu erzeugenden Endprodukte. Es führt zu einer wesentlich saubereren und hygienischeren Lagerung der sterilisierten Halbprodukte gegenüber den üblicherweise durch Kühlung stabilisierten Schlachtnebenprodukten. Es erlaubt eine bessere Energienutzung gegenüber der Kühlung durch weiteres Erwärmen eines bereits bei der Schlachtung warm anfallenden Produktes und es erlaubt eine optimale Logistik für den Abtransport des Halbproduktes durch Bereitstellung einer ausreichenden Lagerkapazität und exakte Messung des Lagervolumens. Es erlaubt ferner eine unmittelbare Qualitätsbestimmung des Halbproduktes durch Messung des Gehalts an Wasser, Eiweiß und Fett über Meßfühler im Lagergefäß oder beim Ab- oder Entladen des Transportfahrzeuges.

Die Anlage, in der das Verfahren für einen beispielhaften Rohwarendurchsatz von 3 t/h durchgeführt wird, besteht aus einem Pufferbehälter A für die Rohware (35 m³ Inhalt) mit Druckschleuse B (0,3 m Innendurchmesser; 0,7 m Länge; 0,05 m³ Inhalt), einem Wärmeübertragungsbehälter (Rührautoklav) C (1,2 m³ Inhalt), einer Verweilstrecke (Halterohr) D (0,16 m Innendurchmesser; 50 m Länge; 1 m³ Inhalt) mit Druckschleuse E (0,16 m Innendurchmesser; 2,5 m Länge; 0,05 m³ Inhalt) und einem Lagerbehälter F (35 m³ Inhalt) für das Halbprodukt. Pufferbehälter und Lagerbehälter sind über einen Wärmeaustauscher G am Pufferbehälter zur Kondensation der im Lagerbehälter bei der Entspannung anfallenden Brüden an eine Wasserstrahlpumpe H angeschlossen, die mit dem vorgereinigten Abwasser des Schlachtbetriebes betrieben wird. Hierüber werden die bei der Entspannung im Pufferbehälter und nach der Brüdenkondensation anfallenden Brüden dem Abwasser des Schlachtbetriebes zugeführt und wird die gesamte Anlage unter leichtem Unterdruck gehalten.

Beim ersten Anfahren der Anlage wird zunächst die typischerweise auf <50 mm Größe zerkleinerte Rohware (z. B. Innereien mit Fetten, Unterbeine, Knochen) über eine Druckluftkanone in den Rohwarenpufferbehälter A geschossen und von dort unmittelbar durch freies Gefälle durch die offene Schleuse B der Rührautoklav C bei geschlossenem Ventil D1 beladen bis dieser zu 90 % gefüllt ist. Dann wird der untere Schieber B2 der Druckschleuse B geschlossen und der Rührautoklav C aufgeheizt, bis die darin befindliche Rohware eine Sterilisationstemperatur von typischerweise 133 °C erreicht hat. Dies nimmt etwa 17 min in Anspruch. Während dieser Zeit wird durch periodisches Öffnen der Schieber B2 und B1 (siehe unten) die Luft, die sich im Autoklaven befindet, solange entfernt, bis der Druck im Autoklaven (p1) mit dem Sattdampfdruck des Wassers bei der entsprechenden Temperatur übereinstimmt. Die Temperatur im Autoklaven C (T1) wird 20 min lang bei 133 °C gehalten und der Inhalt dann nach Öffnen des Schiebers D1 bei geschlossenen Schiebern E1 und E2 in das Halterohr geschossen.

Der Autoklav wird dann bei geschlossenem Schieber D1 durch periodisches Öffnen der Schieber B1 und B2 (siehe unten) wieder bis etwa zu 70 % gefüllt und die Rohware gleichzeitig auf 133 °C aufgeheizt. Danach wird mit der kontinuierlichen Fahrweise begonnen.

Der Rohwarenpufferbehälter A ist über dem Rührautoklaven C angeordnet und über eine Schleuse B mit diesem verbunden. Bei Öffnen des oberen Schiebers B1 der Schleuse B entspannt sich das in der Schleuse B befindliche Wasserdampf-Luft-Gemisch in den Pufferbehälter A (etwa 80 g Wasserdampf, der in der Rohware im Pufferbehälter A kondensiert) und Rohware fällt in die Schleuse B. Nach Schließen des oberen Schiebers B1 wird durch Öffnen des unteren Schiebers B2 die Rohware unter den Druck des Autoklaven C gesetzt und fällt in den Autoklaven C. Nach Schließen des unteren Schiebers B2 ist die Schleuse B wieder frei für die Aufnahme der nächsten Portion Rohware.

Die in den Autoklaven C gefallene Rohware wird über die sich bereits im Autoklaven C befindliche Rohware auf die geforderte Sterilisationstemperatur gebracht, wodurch die Temperatur des Materials im Autoklaven C (T1) leicht absinkt. Sinkt die Temperatur am Ausgang des Autoklaven C zum Halterohr D (T2) unter die vorgegebene Sterilisationstemperatur, so schließt das Einlaßventil zum Halterohr D1 und öffnet erst wieder, wenn die Sterilisationstemperatur überschritten ist.

Am Ausgang des Halterohres befindet sich die Schleuse E. Sobald die Temperatur im Autoklaven (T1) wieder über die Sterilisationstemperatur gestiegen ist und somit das Ventil D1 geöffnet hat, wird über das Einlaßventil E1 in der Schleuse E das sterilisierte Material durch den anstehenden Wasserdampfdruck im Autoklaven in der Schleuse E geschossen bei geschlossenem Ausgangsventil E2. Dann wird das Eingangsventil E1 geschlossen und das Ausgangsventil E2 geöffnet, wodurch sich das sterilisierte Gut in der Schleuse E explosionsartig entspannt und die dabei freigesetzte kinetische Energie des Dampfes das flüssige Material mitreißt in den Lagerbehälter F. Der dabei freigesetzte Dampf (Brüden) wird über einen Heizmantel G am Rohwarenpufferbehälter geleitet, wo er kondensiert und dabei gleichzeitig die Rohware vorwärmt.

Die nach der Kondensation anfallenden Brüden werden zusammen mit der Entspannungsluft aus dem Rohwarenpufferbehälter A mit der Wasserstrahlpumpe H abgesaugt und in das vorgereinigte Abwasser des Schlachtbetriebes eingetragen.

Am Ende eines Tages wird die Anlage über die Schleuse E leergefahren, wobei ein leichtes Gefälle im Halterohr sowie der Knick im Halterohr vor der Schleuse gewährleisten, daß immer der Wasserdampfdruck des heißen sterilisierten Materials über der freien Flüssigkeitsoberfläche des geschlossenen Systems Rührautoklav/Halterohr lastet und für den Transport in die Schleuse E sorgt. Angefahren wir die Anlage am nächsten Tag dann wieder wie bereits oben beschrieben.

Am Ende eines Tages kann aber auch nur der Rührautoklav C sowie die Schleuse E leergefahren werden, während das sterilisierte Material in dem Halterohr D belassen wird. Durch gute Isolierung sinkt hier die Temperatur auch über längere Zeit lediglich geringfügig ab. Beim Anfahren am nächsten Tage ist dann das neuzugeführte Material im Autoklaven C nur auf die vorgegebene Temperatur von 133 °C zu erwärmen, wonach mit der kontinuierlichen Fahrweise begonnen werden kann.

Das sterile Material im Lagerbehälter F läßt sich über mehrere Tage stabil halten. Es wird durch freies Gefälle in ein geschlossenes Silotankfahzeug entleert.

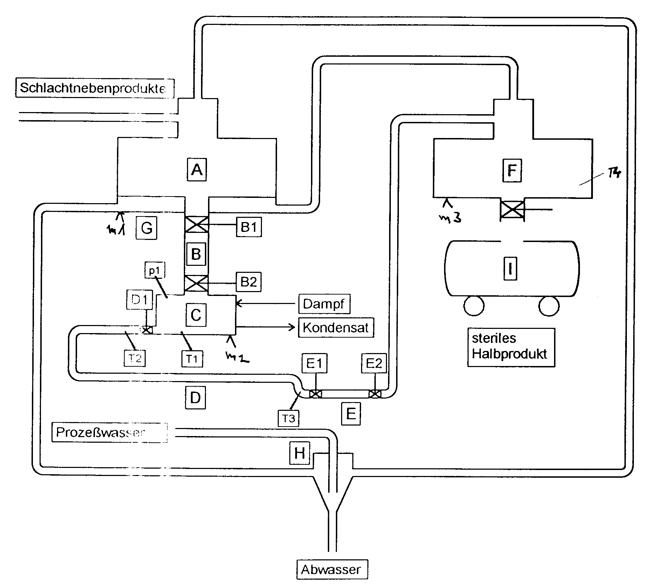

## Patentansprüche

1. Kontinuierliches Verfahren zur Sterilisation unter gesättigtem Wasserdampf von feuchten eiweiß- und fetthaltigen Nebenprodukten der Fleischindustrie, insbesondere der Schlachtindustrie, (Rohware) und zum gleichzeitigen Transport dieses Materials durch das Sterilisationssystem mit Hilfe der im Material enthaltenen Energie, dadurch gekennzeichnet, daß das auf <50mm Teilchengröße vorzerkleinerte Material in einem Rührautoklaven auf die Sterilisationstemperatur mit entsprechendem Sattdampfdruck des im Material enthaltenen Wassers gebracht wird, in einem angeschlossenen Halterohr eine vorgegebene Zeit bei Sterilisationstemperatur und -druck gehalten wird und durch den Druckunterschied zwischen Sterilisations- und Lagerbehälter sowie den Höhenunterschied zwischen Rohwarenpufferbehälter und Autoklaven im vorgegebenen Takt über Schleusen durch das Sterilisationssystem transportiert und durch die explosive Entspannung in der letzten Schleuse in den Lagerbehälter gefördert wird.

2. Verfahren nach Anspruch 1, dadurch gekennzeichnet, daß der Pufferbehälter für die Rohware sich über dem Autoklaven befindet und mit diesem über eine Schleuse verbunden ist, so daß das Rohmaterial durch seine eigene Schwerkraft über die Schleuse in den Autoklaven gefördert wird.

3. Verfahren nach Anspruch 1 und 2, dadurch gekennzeichnet, daß das Halterohr sich unter dem Flüssigkeitsspiegel des Materials im Rührautoklaven befindet, wodurch das Sattdampfpolster im Rührautoklaven für den schubweisen Transport durch das Halterohr sorgt.

4. Verfahren nach Anspruch 1 bis 3, dadurch gekennzeichnet, daß das Halterohr D ein Gefälle zwischen 0,1 und 1 % aufweist und vor der Schleuse E einen Knick nach unten macht (siehe Abbildung), so daß auch bei weitestgehendem Entleeren des Rohres D immer der volle Sattdampfdruck über dem freien Flüssigkeitsspiegel des sterilen Materials im Halterohr bis kurz vor dem Ventil E1 der schleuse E lastet und somit bis zum Ende des Entleerens des Halterohres der Transport in die Schleuse E gewährleistet ist.

5. Verfahren nach Anspruch 1 bis 4, dadurch gekennzeichnet, daß der Flüssigkeitsspiegel im Rührautoklaven zwischen 50 und 90 % des Gesamtinhalts gehalten wird durch Messung des Füllstandes über äußere Druckaufnehmer und die entsprechend geregelte Zufuhr und Abfuhr von Material aus dem Sterilisationssystem.

6. Verfahren nach Anspruch 1 bis 5, dadurch gekennzeichnet, daß über die Schleuse B (Zufuhrschleuse) eine periodische Entlüftung des Gasraums des Rührautoklaven stattfindet.

7. Verfahren nach Anspruch 1 bis 6, dadurch gekennzeichnet, daß die Eingangsschleuse B eine ähnliche Materialmenge aufnimmt wie die Ausgangsschleuse E.

8. Verfahren nach Anspruch 1 bis 7, dadurch gekennzeichnet, daß Schleusenvolumen und Füllvolumen des Rührautoklaven in einem derartigen Verhältnis zueinander stehen, daß die Temperaturschwankungen im Rührautoklaven unter 5 K bleiben.

9. Verfahren nach Anspruch 1 bis 8, dadurch gekennzeichnet, daß die Taktfrequenz der Schleusen zwischen 20 und 240 Takten pro Stunde liegt.

10. Verfahren nach Anspruch 1 bis 9, dadurch gekennzeichnet, daß die Absaugung von Rohwarenpufferbehälter und Halbproduktlagerbehälter über eine Wasserstrahlpumpe, die mit dem gereinigten oder vorgereinigten Abwasser des Schlachtbetriebes betrieben wird, erfolgt.

11. Verfahren nach Anspruch 1 bis 9, dadurch gekennzeichnet, daß die Absaugung von Rohwarenpufferbehälter und Halbproduktlagerbehälter über ein Biofilter erfolgt.

12. Verfahren nach Anspruch 1 bis 9, dadurch gekennzeichnet, daß eine Trocknung des feuchten Halbproduktes mit Erzeugung von Heißwasser von 60 bis 90°C für den Schlachtbetrieb über die Kondensation der bei der Trocknung entstehenden Brüden nachgeschaltet wird.

13. Verfahren nach Anspruch 1 bis 9, dadurch gekennzeichnet, daß ein Pasteurisieren der Rohware im Rohwarenpufferbehälter mit möglicher Entfettung über Dekanter der Sterilisation vorgeschaltet wird.

14. Verfahren nach Anspruch 1 bis 9, dadurch gekennzeichnet, daß ein Pasteurisieren der Rohware im Rohwarenpufferbehälter mit möglicher Knochenschrotabtrennung der Sterilisation vorgeschaltet wird.

15. Verfahren nach Anspruch 1 bis 9, dadurch gekennzeichnet, daß die Sterilisation bei Temperaturen über 100°C durchgeführt wird und die Druckdifferenz für den Transport dadurch gewährleistet wird, daß der Halbproduktlagerbehälter unter Atmosphärendruck steht bzw. auf leichtem Unterdruck gehalten wird.

16. Verfahren nach Anspruch 1 bis 9, dadurch gekennzeichnet, daß die Sterilisation bei Temperaturen unter 100 °C durchgeführt wird und die Druckdifferenz für den Transport dadurch gewährleistet wird, daß der Halbproduktlagerbehälter auf Unterdruck gehalten wird.

17. Verfahren nach Anspruch 1 bis 9, dadurch gekennzeichnet, daß der Gehalt des Halbprodukts an Protein, Fett und/oder Wasser im Entspannungs- und Lagerbehälter kontinuierlich durch eine NIR-Sonde oder eine andere physikalische Meßeinrichtung gemessen wird.

18. Verfahren nach Anspruch 1 bis 9, dadurch gekennzeichnet, daß der Füllstand im Lagerbehälter kontinuierlich über einen Druckaufnehmer oder eine andere physikalische Meßeinrichtung gemessen wird.

19. Verfahren nach Anspruch 1 bis 9, dadurch gekennzeichnet, daß die Entspannungsbrüden zum Aufheizen der Rohware im Mantel des Rohwarenpufferbehälters kondensiert werden.

20. Verfahren nach Anspruch 1 bis 9, dadurch gekennzeichnet, daß der Transport der Rohware in den Rohwarenpufferbehälter über eine Druckluftkanone erfolgt.

21. Verfahren nach Anspruch 1 bis 9, dadurch gekennzeichnet, daß die Frischdampfkondensatableitung des Autoklaven an dem Halterohr D entlang zum Dampfkessel zurückgeführt wird.
